# EUROPEAN PATENT APPLICATION

(11) **EP 2 037 714 A2**
(43) Date of publication of application: **18.03.2009**
(21) Application number: 08161547.8
(22) Date of filing: 31.07.2008
(51) Int. Cl.: H04W 48/18, H04W 88/06

(54) **A removable card and a mobile wireless communication device**

(30) Priority: 14.09.2007 US 855846
(71) Applicant: SILICON STORAGE TECHNOLOGY, INC., Sunnyvale, CA 94086 (US)
(72) Inventor: Ding, Zhimin, Sunnyvale, CA 94087 (US); Morley, Richard M., Pleasanton, CA 94566 (US); Johnston, Stephen c/o Silicon Storage Technology, Inc., Sunnyvale, California 94086 (US); Yeh, Bing, Los Altos Hills, CA 94025 (US); Berg, John E., Palo Alton, CA 94306 (US)
(74) Representative: Hogg, Jeffery Keith

(57) **Abstract**

A removable card for use with a mobile wireless communication device has a processor and a non-volatile memory, connected to the processor. The memory has programming code stored configured to be executed by the processor and is operable in one of two modes. In a first mode the card is connected to the device with the card storing information received wirelessly by the device from the Internet. In a second mode the card is connected to a network portal device, which is connected to the Internet, with the card storing information received through the network portal device from the Internet. In another embodiment, the removable card has electrical connections for connecting to a mobile wireless communicating device for use by a user to connect to the Internet. The memory has two portions: a first portion and a second portion with the partitioning being alterable. The processor restricts access to the first portion by the user, while grants access to the second portion to the user. Finally, the present invention relates to a mobile wireless communication device.

## Description

### TECHNICAL FIELD

The present invention relates to a removable card having a processor and a non-volatile memory and is suitable for use with a mobile wireless communication device, for connecting to a network of interconnected computer networks ("Internet") in which the non-volatile memory stores program code configured to be executed by the processor to operate in two modes. In a first mode, the card is connected to the wireless device with the card storing information received wirelessly (such as via a cellular network) by the device from the Internet. In a second mode, the card is connected to a network portal device, which is connected to the Internet, with the card storing information received through the network portal device. The card may be connected to the network portal device via a wireless link (such as Wi-Fi) and connected to the Internet or may be connected directly to the Internet through a PC. In another aspect of the present invention, the removable card has a processor and a memory with two portions, with the processor restricting access to the first portion by the user, and granting user access to the second portion and with the partition being alterable. Finally, the present invention relates to a wireless communication device.

### BACKGROUND OF THE INVENTION

Mobile wireless communication devices, such as cell phones are well known in the art. Typically, a cell phone has a removable card (called "SIM card") which consists of a processor with RAM, ROM or EEPROM or Flash memory, I/O pads, and security monitoring circuit all mounted on a removable card. The non-volatile memory in the SIM card is to store information required to access the mobile operator's network. Thus, the card may store information such as telephone number, access code, number of minutes, calling plan etc.

A network of interconnected computer networks ("Internet") is also well known in the art. The Internet can be accessed by computers having a wired connection, or through a wireless network.

With the increase in speed in mobile networks, such as the 3G network, users of mobile wireless devices desire to access the Internet via their mobile wireless communication devices. Even though the speed of the mobile network is increasing, the cost of using that network may also increases with greater use of the network, especially when accessing the Internet.

Hence, it is desirable to provide a mechanism whereby the user's experience to access the Internet through the mobile network is not diminished, but at the same time, providing means to reduce the cost of accessing the Internet through the mobile network. Heretofore, it is known that a communication device (such as a cell phone) can access the Internet via a common carrier wireless network (such as a cellular network) and also access the Internet via a wireless link, such as a Wi-Fi link. However, the prior art has not taught the access of the Internet by the removable card. In the prior art, it is also known to use the SIM card as a local server to provide content to the cell phone. However, the prior art has not taught that the memory portion of the SIM card can be partitioned between a user restricted portion and a user accessible portion, with the partition being alterable.

It is further desired, to provide features and mechanism which provides for greater control by a mobile network operator (MNO) of mobile devices that are connected to their network.

### SUMMARY OF THE INVENTION

Accordingly, in the present invention, a removable card for electrical connection to a device has a processor and a non-volatile memory connected to the processor wherein the non-volatile memory has programming code stored configured to be processed by the processor and is operable in one of two modes. In a first mode the card is connected to the device with the card storing information received wirelessly by the device from the Internet. In a second mode the card is connected to a network portal device, which is connected to the Internet, with the card storing information received through the network portal device from the Internet.

In addition, in the present invention, a removable card has electrical connections for connecting to a mobile wireless communicating device for use by a user to access the Internet. The card has a processor and a non-volatile memory connected to the processor. The non-volatile memory has two portions, The processor restricts access to the first portion by the user and grants access to the second portion to the user.

The present invention also relates to a removable card having electrical connections for connecting to a communication device, which is configured to access the Internet. The card has a processor, and a non-volatile memory connected to the processor. The non-volatile memory can store a public IP network address whereby when the card is connected to the communication device, it can receive information from a server connected to the Internet at the public IP network address, and a private IP network address, whereby the card can function as a local server by providing data stored therein.

The present invention also relates to a mobile wireless communication device which can be connected to the Internet in one of two modes. The device has a transceiver for communicating wirelessly via a wireless common carrier network to transmit and receive information from the Internet in a first mode. The device also has a memory for storing data received from the Internet. Finally, the device also has a communication logic circuit including a switch to transmit and receive information from the Internet through a network portal device in a second mode. When the memory is connected to the network portal device, the switch causes the transceiver to cease transmitting and receiving wirelessly information from the Internet in the first mode.

The present invention also relates to a mobile wireless communication device for connection the Internet. The device has a transceiver for communicating wirelessly via a wireless common carrier network. The device further has a first processor for controlling the application and communication of the device, and a second processor and a non-volatile memory connected to the second processor. The non-volatile memory has two portions: a first portion accessible by the first processor, and a second portion accessible by the second processor. The second processor restricts access to the first portion by the user.

### BRIEF DESCRIPTION OF THE DRAWINGS

Figure 1 is a diagram of the removable card of the present invention connected to a mobile wireless communication device of the present invention for connection to a mobile network, as well as to the Internet.

Figure 2 is a schematic diagram of the removable card of the present invention connected to the mobile wireless communication device of the present invention.

Figure 3 is a block level diagram circuit diagram of the removable card of the present invention.

Figure 4 is a detailed circuit diagram of the processor portion of the removable card of the present invention.

Figure 5 is a diagram of the two modes of communication of the mobile wireless communication device with the removable card of the present invention with the Internet, wherein in the first mode, the removable card communicates through the wireless communication device wirelessly with the mobile network for access to the Internet, and wherein in a second mode the removable card is connected to a network portal device for connection to the Internet.

### DETAILED DESCRIPTION OF THE PREFERRED EMBODIMENT

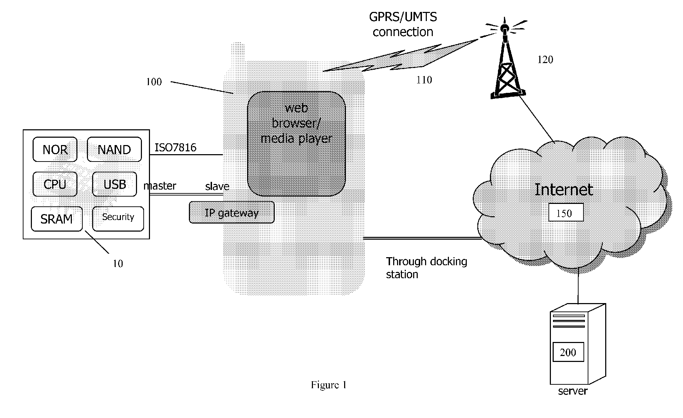

Referring to Figure 1 there is a shown a graphic illustration of a mobile wireless communication device 100, e.g. a cell phone 100 for use in a publicly accessible (common carrier) wireless communication network, such as a cellular network 110, which includes cellular access towers 120. The cellular network 110, through access servers (not shown) located on or near the cell phone towers 120 can connect to a network of interconnected computer networks 150, also known as the Internet 150. Thus, the cell phone 100 can communicate wirelessly with other cell phones 100 on the cell phone network 110. In addition, the cell phone 100 can communicate wirelessly with the Internet 150 through the cell phone network 110 which has the access servers connected to the Internet 150. Further, as will be shown hereinbelow, the removable card 10 portion of the cell phone 100 can also be connected directly to the Internet 150 through a network portal device, such as docking station 160, which is connected to a personal computer, which connects to the Internet 150.

The cell phone 100 of the present invention has a removable card 10, much like the removable SIM card of the prior art. However, as will be seen, the features of the removable card 10 of the present invention are vastly different and improved over the removable SIM card of the prior art.

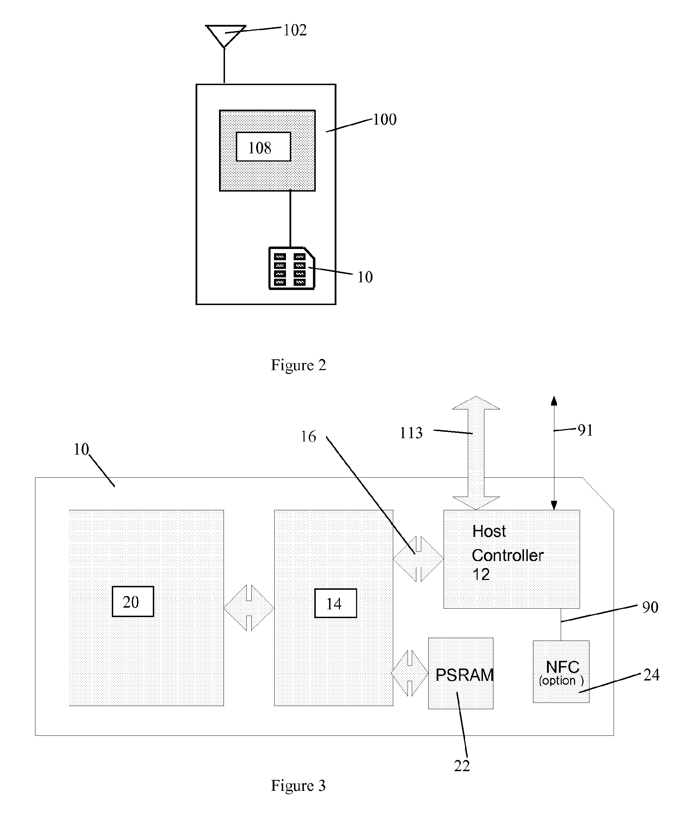

Referring to Figure 2, there is shown a schematic diagram of the removable card 10 of the present invention connected to the mobile wireless communication device 100 of the present invention. Because the device 100 is designed to operate wirelessly across the cellular network 110, the device 100 comprises an antenna 102. A transceiver 104 is connected to the antenna 102. The transceiver 104 transmits and receives modulated signals to and from the cellular network 110. Such components are well known in the art. The received signals may be demodulated and then converted into digital signals and provided to a gateway 106. The gateway 106 may also have an NAT (Network Address Translation) circuit. An NAT circuit 106 translates or maps a private IP address to one or more ports of a public IP address. As will be discussed hereinafter, the device 100 (through the removable card 10), may be assigned a public address (through the well known DHCP protocol) when the device is connected to the Internet 150, and may have a private address when operating as a local server such that the device 100 is not connected to the Internet 150. Digital signals to be transmitted are modulated and converted by the transceiver 104 into appropriate electromagnetic frequency signals for transmission by the antenna 102. Because the device 100 can access the Internet 150, a browser and media player 112 is also provided. The browser and media player 112 interfaces in the well known TCP/IP protocol as well as the HTTP protocol with the gateway 106 to provide and to receive digital signals received by the device 100 from the Internet 150, which may be displayed on a display 108. Associated with the browser and media player 112 is a processor (not shown) which also controls the transceiver 104 and other well known hardware circuits of the device 100 to communicate with the network 110.

The removable card 10 of the present invention is connected to the device 100 through a well known USB interface 114 through the docking station 160. The USB interface 114 connects to the Gateway 106. Thus, digital signals from the removable card 10 are provided to and from the device 100 through the docking station 160, through the USB interface 114, through the gateway 106 and through the transceiver 104 to the antenna 102.

The removable card 10 of the present invention is shown in greater detail in Figure 3. in particular, the card 10 comprises a host controller 12 which interfaces with the USB interface 114 through a USB bus 113. In addition, the host controller 12 is connected to a memory controller 14, through a bus 16. The memory controller 14 controls a NAND memory 20 and a PSRAM 22. The operation of the memory controller 14 in controlling the NAND memory 20 and the PSRAM 22 is fully described in US Patent application serial number 11/637,420, published on June 28, 2007 under publication 2007-0147115, and assigned to the present assignee, which disclosure is incorporated by reference herein in its entirety. The host controller 12 may also be optionally connected to a Near Field Communicator (NFC) 24. An NFC 24 is a close range RF circuit that permits wireless communication in close proximity. Thus, the device 100 with the NFC 24 may act as an "electronic wallet" for financial transactions or for identification purpose, or as another access to the Internet 150. Of course, the device 100 can also be connected wirelessly with the Internet 150 via other forms of wireless networks, such as a Wi-Fi network.

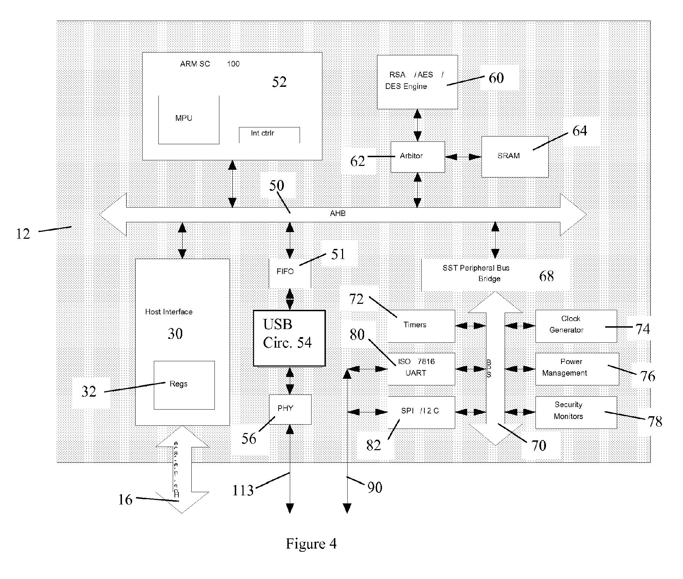

Referring to Figure 4, there is shown a detailed schematic block diagram of the host controller 12. The host controller 12 comprises a high speed bus 50, to which a host interface 30, for connecting to the memory controller 14 is attached. The host interface 30 also comprises registers 32 for temporarily holding data that is supplied to and from the memory controller 14. The host controller 12 also comprises a FIFO (First-In First Out) circuit 51 which is connected to the high speed bus 50. The FIFO 51 is also connected to a USB controller circuit 54, which is connected to a PHY circuit 56 (which is the standard physical layer interface for a USB port. The circuit 56 includes pads, voltage level shifters and clock recovery circuits.) for connection to the USB bus 113. A secure processor, such as an ARM SC-100 processor 52 is also connected to the high speed bus 50.

The host controller 12 also comprises a RSA/AES/DES engine 60, which is a secure co-processor to the ARM SC-100 processor 52. The engine 60 is connected to the high speed bus 50 through an arbitration circuit 62. Since both the engine 60 and the processor 52 can request memory or other resources of the high speed bus 50 at the same time, the arbitration circuit 62 arbitrates simultaneous requests for access to the bus 50. The engine 60 also has access to a dedicated high speed cache RAM, such as an SRAM 64. Finally, a bridge circuit 68 is also connected to the high speed bus 50. The bridge circuit 68 is also connected to a slower bus 70, to which a timer 72 is connected, a clock generator 74 is connected, a power management circuit 76 is connected, a security monitoring circuit 78 is connected, a UART 80 is connected, and a SPI circuit 82 (Serial Peripheral Interface - a well known bus) is connected. The UART 80 and the SPI 82 are also connected to a bus 90, which is connected to the NFC 24. The controller 12 is also connected to a bus 91 which is a ISO7816 serial interface bus. It is a byte oriented Universal Asynchronous Receiver/Transmitter (UART) interface commonly found in prior art cell phones between the phone and the SIM card. This type of interface (using UART) is being replaced by the USB interface. Thus, the presence of the bus 91 is for backward compatibility only.
Operation of the Mobile Wireless Communication Device

There are many modes of operation of the mobile wireless communication device 100 of the present invention. Initially, it should be noted that the mobile network operator (MNO), the operator of the cellular network 110, distributes each of the removable cards 10, and also has a server 200 connected to the Internet 150. Each of the removable cards 10 of the present invention distributed by the MNO is assigned a unique public IP address by the MNO which is stored in the non-volatile memory portion of the removable card 10. The unique public IP address directs the device 100 to the MNO server 200. As disclosed in US Patent application serial number 11/637,420, published on June 28, 2007 under publication 2007-0147115, non-volatile memory is present in the NAND memory 20 as well as NOR memory being embedded in the controller 14. In either event, the MNO assigns and pre-stores a unique public IP address in the non-volatile memory portion of the removable card 10. The non-volatile memory may be divided into two portions, with the partition between the first portion and the second portion being alterable. The partitioning of the first portion/second portion can be done by the MNO provider of the removable card 10. The first portion can be accessed by the processor which controls the transceiver 104 and browser and media player 112, and the other hardware circuits that control the communication of the device 100. The second portion can be accessed by the processor 52, in the removable card 10, which is accessible by the user. In addition, the processor 52 controls the degree of access (which includes the type of information) that a user may have to the first portion. In any event, for reasons to be discussed, the unique public IP address assigned by the MNO is stored in the first portion, and the processor 52 prohibits access thereto. However, other types of information, such as sensitive user information, such as user name, credit card, etc. may also be stored in the first portion and the processor 52 may grant the user limited access to those type of information.

After the removable card 10 of the present invention is distributed to users, and the user has inserted the card 10 into the device 100 of the present invention, the user can then use the device 100 to operate on the cellular network 110, as it was done in the prior art. Similar to the prior art, the card 10 may also have information related to the usage of the device 100, such as telephone number, access code, number of minutes, calling plan etc on the cellular network 110 stored in the first portion (user restricted) of the memory portion of the card 10. Clearly the storage of this type of information in the user restricted is appropriate, so that the user cannot have unlimited access. In this manner, the removable card 10 functions no differently than the SIM card of the prior art when used with the cellular network 110.

The inventive features of the present invention can be seen when the user attempts to use the device 100 to access the Internet 150. There are at least two possible modes (first mode or second mode) to access the Internet 150. The programming code stored in the non-volatile memory 14 can cause the processor 52 to access the Internet 150 in either the first mode or the second mode of operation.

In the first mode, the Internet 150 can be accessed by the removable card 10 through the device 100 through the cellular network 110. In that event the device 100 is connected to the Internet 150 through the access servers connected to the cellular network 110, near the tower 120. When initiated, the access servers (similar to an Internet Service Provider (ISP)) may assign a dynamic public IP address to the device 100 during the session connecting the device 100 to the Internet 150. Such dynamic assignment of public IP addresses when the device 100 is connected to the Internet 150 is well known in the art and is in accordance with the DHCP protocol. Alternatively, as discussed previously, the public IP address may be preassigned and stored in the removable card 10. The browser and media player 112 of the device 100 is then used to browse or surf the Internet 150. Contents from the Internet 150 can then be downloaded and saved in the removable card 10, in either the user restricted memory portion or the user accessible portion of the card 10.

For secure communication with the Internet, the user restricted portion of the memory portion of the card 10 may store a secret key. The RSA/AES/DES engine 60 of the host controller 12 can use that secret key to encrypt and/or decrypt communication to and from the Internet 150. The secret key can be provided by the MNO when it initially distributes the removable card 10 or it can be downloaded from the MNO server 200 which is connected to the Internet 150, when the device is connected to the Internet 150.

The information retrieved from the Internet 150, via the wireless network 110, may be saved in the user restricted portion of the removable card 10 which is associated with an assigned private IP address. The private IP address can be first assigned by the MNO and stored in the removable card 10 before distribution. Alternatively, the private address may be assigned by the access server connected to the cellular network 120. Finally, the private address may simply be the public IP address dynamically assigned by the access severs and then translated by the NAT circuit 106 into a private IP address. After the information from the Internet 150 is stored in the removable card 10, it can be retrieved by the browser and media player 112, and displayed on the display 108 of the device 100, using the private IP address. This is similar to the operation of an intranet. Thus, the removable card 10 serves to function as a local (private) server in providing the data stored in its memory to the browser and media player 112.

The use of a "private" IP address when the browser 112 is accessing in a local mode is advantageous because it is more economical than having two public IP address assigned to the device 100: one IP address for the phone portion of the device 100 when surfing or browsing the Internet 150 and another public IP address for the removable card 10, when viewing the contents thereof. Since the content stored in the removable card 10 is for the user using the device 100, there is no need for the removable card 10 to have a public IP address. Furthermore, the time when the user is viewing the contents stored in the removable card 10, the device 100 may not be connected to the Internet 150.

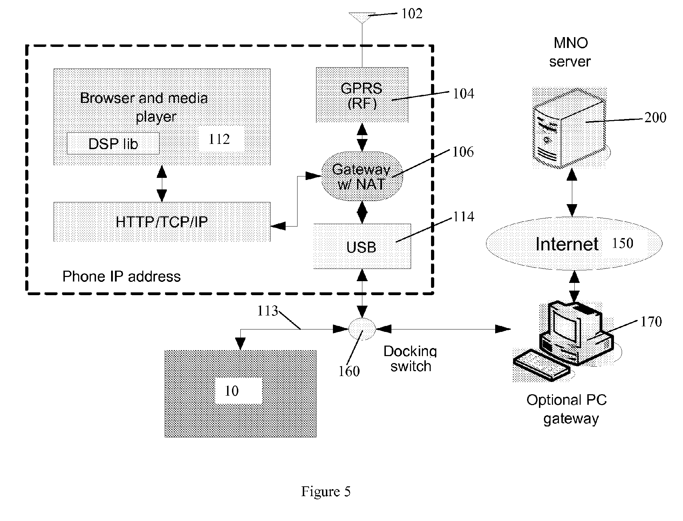

In a second mode, the device 100 can access the Internet 150 other than through the cellular network 110. One way is through a network portal device 170 such as a terminal connected to a PC (for example through a USB port). Another way is through a wireless link, such as Wi-Fi which connects wirelessly to a receiving device (not shown) that is connected to the Internet 150. In either way, the device 100 has a docking switch 160. Referring to Figure 5, there is shown schematically a diagram of this mode of communication (along with the first mode) Normally, in the first mode, the removable card 10 is connected to the USB interface 114 through the docking switch 160. However, when the device 100 is connected to the PC 170 or through the NFC 24, the docking switch 160 is changed causing the removable card 10 to disconnect from the USB interface 114. Thus, for example, when a USB cable is connected to the docking switch 160, the removable card 10 disconnects from the USB interface 114 and connects directly to the PC 170 along its USB port. The docking switch 160 then breaks the connection between the removable card 10 and the rest of the device 100 including the transceiver 104. Because the removable card 10 contains the cellular network 110 access information, if the device 100 was accessing the Internet wirelessly through the cellular network 110, then the device 100 would cease to transmit/receive wirelessly to/from the cellular network 110. Similar to the first mode of operation, when the device 100 is connected to the Internet 150 through the docking switch 160, to the PC gateway 170, it is initially assigned a public IP address, by the Internet Service Provider (ISP) for connection to the Internet 150. Again, this is a dynamically assigned public IP address for use during the session that the device 100 is connected to the Internet 150.

Finally, because the removable card 10 stores a public IP address assigned by the MNO, in the user restricted portion of the memory, that public IP address directs the device 100 to the MNO server 200. During the time period when the device 100 is connected to the Internet 150 through the PC portal 170, and when the user is not browsing or surfing the Internet 150, (as in e.g. when the device 100 is in the docking station connected to the docking switch 160 for charging the battery for the device 100) the device 100 can go the MNO server 200 using the public IP address stored in the removable card 10. The MNO server 200 can then cause content, such as movies, or programming code (updates for the device 100) to be downloaded and stored in the user restricted portion of the removable card 10 of the device 100. The benefit of this mode is that a large amount of content can be downloaded when the device 100 is not connected to the cellular network 110, and when the user is not actively surfing or browsing the Internet 150. The downloaded movies or other material can be subsequently activated by an authorization code and/or payment code. Since the movies or other content were downloaded from the MNO server 200, the user can be sure of the trustworthiness of the content (i.e. free from virus etc.). In addition, since the owner of the content knows that the content is downloaded in a secure manner and stored in a user restricted portion, they can be assured that illicit copies will not be made. In this manner, this becomes a trustworthy procedure for all parties. Finally, by also permitting programming code to be distributed in this manner, an efficient and convenient mode is provided to assure the update of the devices 100.

Furthermore, each removable card 10 may also be assigned a unique IP address by the MNO operator. This offers another unique feature of the present invention. When the device 100 with the removable card 10 connected thereto is connected to the Internet 150, and with the removable card 10 having a unique IP address, the MNO server 200 which is also connected to the Internet 150 can download information for all removable cards 10 or just certain removable cards 10 or even only a specific removable card 10. The information downloaded to one or more removable cards 10 may be stored in the user restricted memory portion of the card 10. Examples of information that can be stored in the user restricted portion may include: administrative information such as change in calling plan, increase in minutes etc. Further, the "information" may be data or it may be programming code (including Java applets) for execution by the host controller 12. Thus, for example, the "information" downloaded from the MNO server 200 may be a program causing the host controller 12 to execute the code causing the device 100 to access the cellular network 110 to access the Internet 150 periodically or to access specified location on the Internet 150 (such as the IP address of the MNO server 200) or in some specified manner to retrieve updates, downloads, etc.

## Claims

1. A removable card having electrical connections for connecting to a mobile wireless communicating device to a network of interconnected computer networks ("Internet"), comprising:
a processor; and
a non-volatile memory connected to the processor, having programming code stored in the non-volatile memory configured to be processed by the processor and operable in one of two modes: a first mode in which said card is connected to the device with the card storing information received wirelessly by the device from the Internet; and a second mode in which said card is connected to a network portal device, which is connected to the Internet, with the card storing information received through the network portal device from the Internet.

2. The removable card of claim 1 wherein in said first mode said card storing information received wirelessly by the device through a wireless network connected to the Internet, and
wherein in said second mode said card is connected directly to the Internet through the network portal device.

3. The removable card of claim 2 wherein said card connects wirelessly to the network portal device.

4. The removable card of claim 1 wherein the non-volatile memory further stores a private IP address for access by the mobile wireless communicating device in internet protocol, for accessing data stored in the card.

5. The removable card of claim 4 wherein the non-volatile memory stores a public IP address assigned to the card when the card is connected to the Internet.

6. The removable card of claim 1 wherein said non-volatile memory can be partitioned between a first portion, and a second portion; wherein programming code for execution by the processor is stored in the first portion and said programming code when executed causes the user to have access to the second portion and to be restricted from accessing the first portion .

7. The removable card of claim 6, wherein said partition between the first portion and the second portion is alterable.

8. A mobile wireless communication device for connection to a network of interconnected computer networks ("Internet") in one of two modes, said device comprising:
a transceiver for communicating wirelessly via a wireless common carrier network to transmit and receive information from the Internet in a first mode;
a memory for storing data received from the Internet; and
a communication logic circuit including a switch to transmit and receive information from the Internet through a network portal device in a second mode, wherein when the memory is connected to the network portal device, said switch for causing said transceiver to cease transmitting and receiving wirelessly information from the Internet in the first mode.

9. The device of claim 8 wherein said communication logic circuit further comprising a processor and programming code configured to be processed by the processor to determine the first mode or the second mode for transmitting and receiving information from the Internet.

10. The device of claim 9 wherein said memory is a removable card which further comprises. the processor; and a non-volatile memory connected to the processor, wherein said non-volatile memory for storing a network address.

11. The device of claim 10 wherein said processor for determining the mode for said device to operate in retrieving the type of information from the Internet, and for storing same in said non-volatile memory.

12. The device of claim 11 wherein said non-volatile memory further for storing programming code configured to be processed by the processor for functioning as a local server in providing information stored in the non-volatile memory to the mobile wireless communication device.

13. The removable card of claim 12 wherein the non-volatile memory further stores a private IP address for access by the mobile wireless communicating device in internet protocol, for accessing the Internet through the mobile wireless communicating device in the first mode.

14. A removable card having electrical connections for connecting to a mobile wireless communicating device for use by a user to access a network of interconnected computer networks ("Internet"), comprising:
a processor; and
a non-volatile memory connected to the processor, having two portions: a first portion and a second portion wherein said processor restrict access to the first portion by the user, and grants access to the second portion to the user.

15. The removable card of claim 15 wherein the partitioning of said first portion and said second portion is alterable.

16. The removable card of claim 13 wherein the non-volatile memory has programming code stored therein configured to be processed by the processor and operable in one of two modes: a first mode in which said card is connected to the device with the card storing information received wirelessly by the device from the Internet; and a second mode in which said card is connected to a network portal device, which is connected to the Internet, with the card storing information received through the network portal device from the Internet.

17. The removable card of claim 16 wherein in said first mode said card storing information received wirelessly by the device through a wireless network having a wireless access device connected to the Internet, and wherein in said second mode said card is connected directly to the Internet through the network portal device.

18. A mobile wireless communication device for connection to a network of interconnected computer networks ("Internet"), said device comprising:
a transceiver for communicating wirelessly via a wireless common carrier network;
a first processor for controlling application and communication of the device ;
a second processor; and
a non-volatile memory connected to the second processor, having two portions: a first portion accessible by the first processor, and a second portion accessible by the second processor, wherein the second processor restricts access to the first portion by a user.

19. The device of claim 18 wherein said second processor and non-volatile memory are contained in a removable card.

20. The device of claim 19 wherein the partitioning of said first portion and said second portion is alterable.

21. The device of claim 20 wherein the non-volatile memory has programming code stored therein configured to be processed by the second processor and operable in one of two modes:
a first mode in which said card is connected to the transceiver with the card storing information received wirelessly by the device from the Internet; and a second mode in which said card is connected to a network portal device, which is connected to the Internet, with the card storing information received through the network portal device from the Internet.

22. The device of claim 21 wherein in said first mode said card storing information received wirelessly by the device through a wireless network having a wireless access device connected to the Internet, and wherein in said second mode said device is connected directly to the Internet through the network portal device.

23. A removable card having electrical connections for connecting to a communicating device to a network of interconnected computer networks ("Internet"), comprising:
a processor; and
a non-volatile memory connected to the processor,
wherein said non-volatile memory for storing a public IP network address whereby said card when connected to said device can receive information from a server connected to the Internet at said network address, and a private IP network address whereby said card functions as a local server by providing data stored therein.

24. The removable card of claim 23 wherein said non-volatile memory further comprising two portions: a first portion accessible by the communicating device for storing information from the server and having restricted access by the user, and a second portion accessible by the user.

25. The removable card of claim 24 wherein the partitioning of memory of said first portion and said second portion is alterable.
